# EUROPÄISCHE PATENTANMELDUNG

(11) **EP 1 508 398 A1**
(43) Veröffentlichungstag der Anmeldung: **23.02.2005**
(21) Anmeldenummer: 04018869.0
(22) Anmeldetag: 09.08.2004
(51) Int. Cl.: B23K 26/40, B29C 65/16

(54) **Verfahren zum Verbinden von Formteilen aus Kunststoff und Metall**

(30) Priorität: 22.08.2003 DE 10338588
(71) Anmelder: Bayer Chemicals AG, 51368 Leverkusen (DE)
(72) Erfinder: Krause, Frank, 51469 Bergisch Gladbach (DE); Detlev, Joachimi, Dr., 47800 Krefeld (DE)

(57) **Zusammenfassung**

Die Erfindung beschreibt ein Verfahren zum Verbinden wenigstens eines Formteils aus Metall (1) und eines Formteils aus thermoplastischem Kunststoff (2), wobei die Formteile in Kontakt gebracht werden und im Kontaktbereich das Formteil aus Metall (1) mit einem Laser (3) bestrahlt wird.

## Beschreibung

Die Erfindung betrifft ein Verfahren zum Verbinden wenigstens eines Formteils aus Metall und eines Formteils aus Kunststoff.

Kunststoff-Metall-Verbundbauteile, die durch Umspritzen von Funktionsteilen mittels thermoplastischem Kunststoff hergestellt werden, haben in den letzten Jahren breite Anwendung u.a. in der Automobil- und Elektroindustrie gefunden. Bauteile für Elektroanwendungen, bei denen Kontaktdurchführungen durch eine Gehäusewand erforderlich sind, z.B. Kfz-Sicherungskästen oder -Sensorgehäuse, werden unter anderem durch das direkte Umspritzverfahren hergestellt. Dabei wird ein thermoplastischer Kunststoff, z.B. Formmassen enthaltend Polyamid (PA) oder Polybutylenterephthalat (PBT) oder PBT-Blend, um die in einem Hohlraum eines Spritzgießwerkzeugs fixierten Kontaktdurchführungen herumgespritzt. Die Kontaktdurchführungen können beispielsweise Stanzbleche sein, die meist aus Kupfer oder kupferhaltigen Legierungen bestehen. Mit Hilfe des Umspritzverfahrens können auch Leiterplatten, Leiterbahnen o. dgl. in Kunststoffgehäuse integriert werden, indem sie mit thermoplastischem Kunststoff umspritzt werden. Nachteilig bei dem Verfahren ist jedoch, dass meist nur eine geringe Haftung zwischen den Metall- und den Kunststoffkomponenten erzielt wird, so dass häufig kein mediendichter Verbund erzielt wird. Es treten daher Undichtigkeiten auf, die nur durch aufwändige Maßnahmen, wie z.B. Abdichtung mit Silikon oder vorherige Oberflächenbehandlung des Metalls mit einem Haftvermittler (z.B. Polyurethandispersionen, Ethylenvinylacetat-Copolymer), zu beheben sind.

Auch das Vorwärmen des Metalls verbessert die Haftung des Kunststoffs auf dem Metall. Um eine sehr gute adhäsive Haftung zu erzielen, ist allerdings eine Temperierung der Metallteile auf eine Temperatur im Bereich der Schmelztemperatur erforderlich. Dies ist insbesondere bei dünnwandigen Metallteilen, z.B. bei Stanzblechen wie sie für Elektroanwendungen eingesetzt werden, nicht praktikabel. Die Temperatur entsprechender Spritzgießwerkzeuge ist mit 60 bis 90°C so niedrig, dass sich auch gut vorgewärmte dünnwandige Metallteile, die in das Spritzgießwerkzeug eingelegt werden, auf zu niedrige Temperaturen abkühlen, bevor sie mit Kunststoffschmelze umspritzt werden.

Aufgabe der vorliegenden Erfindung ist es, ein Verfahren zur Verfügung zu stellen, mit dem Formteile aus thermoplastischem Kunststoff mit Formteilen aus Metall dicht verbunden werden können und eine gute Adhäsion des Kunststoffs auf dem Metall bewirkt wird.

Gegenstand der Erfindung ist ein Verfahren zum Verbinden wenigstens eines Formteils aus Metall und eines Formteils aus thermoplastischem Kunststoff, wobei die Formteile in Kontakt gebracht werden und im Kontaktbereich das Formteil aus Metall mit einem Laser bestrahlt wird.

Nach dem erfindungsgemäßen Verfahren werden die zu verbindenden Formteile aus Metall und Kunststoff zunächst miteinander in Kontakt gebracht und in ihrer Position gehalten. Die Formteile werden beispielsweise dadurch miteinander in Kontakt gebracht, dass sie aneinander, ineinander oder übereinander gelegt werden. Im Kontaktbereich der beiden Formteile berühren sie sich. Dann wird im Kontaktbereich mittels eines Lasers das metallische Formteil erwärmt, bis der Schmelzpunkt des thermoplastischen Kunststoffs erreicht ist und der Kunststoff schmilzt. Dabei kann das metallische Formteil in dem gesamten Kontaktbereich oder auch nur in Teilbereichen des Kontaktbereichs mit einem Laser behandelt werden. Durch das Schmelzen des Kunststoffs in dem Bereich bzw. in den Bereichen, in denen das metallische Formteil mit einem Laser bestrahlt wird, wird eine adhäsive Verbindung zwischen den beiden Formteilen hergestellt. Diese Verbindungsbereiche (Fügebereiche) können von beliebiger Geometrie sein, wie z.B. punktförmig, linienförmig oder flächig. Während der Laserbestrahlung und/oder während des Erstarrens des geschmolzenen Kunststoffs wird bevorzugt ein Fügedruck auf die zu verbindenden Formteile aufgebracht.

In einer ersten Ausführungsform des erfindungsgemäßen Verfahrens wird das metallische Formteil direkt mit dem Laser bestrahlt. Dies bedeutet, dass diejenige Fläche des metallischen Formteils bestrahlt wird, welche nicht mit dem Kunststoff-Formteil in Kontakt ist. Das Metall-Formteil wird also auf seiner dem Kunststoff-Formteil gegenüberliegenden Fläche bestrahlt. In dieser Ausführungsform kann der thermoplastische Kunststoff frei gewählt werden.

In einer zweiten Ausführungsform wird das metallische Formteil indirekt mit dem Laser bestrahlt. Dies bedeutet, dass diejenige Fläche des metallischen Formteils bestrahlt wird, welche mit dem Kunststoff-Formteil in Kontakt ist. Das Metall-Formteil wird also auf seiner dem Kunststoff-Formteil zugewandten Fläche bestrahlt, wobei der Laserstrahl durch das Kunststoff-Formteil hindurchtritt. Diese Ausführungsform setzt voraus, dass der thermoplastische Kunststoff eine ausreichende Transmission im Wellenlängenbereich des Lasers aufweist. Bevorzugt beträgt die Transmission im Wellenlängenbereich von ca. 800 bis ca. 1200 nm mindestens 15 %.

Jede beliebige Kombination der beiden Ausführungsformen ist möglich. Beispielsweise kann bei der indirekten Laserbestrahlung ein zusätzliches Kunststoff-Formteil auf der der bestrahlten Fläche des Metall-Formteils gegenüberliegenden Fläche angeordnet sein. Für das zusätzliche Kunststoff-Formteil kann dabei ein beliebiger thermoplastischer Kunststoff gewählt werden. Außerdem kann beispielsweise das Formteil aus Metall auf beiden Flächen mittels Laserbestrahlung mit einem Kunststoff-Formteil verbunden werden. Dabei kann z.B. zunächst ein erstes Formteil aus einem beliebigen thermoplastischen Kunststoff mittels direkter Laserbestrahlung auf einer ersten Fläche des metallischen Formteils aufgebracht werden und anschließend ein zweites Formteil aus einem für die Wellenlänge des Lasers transparenten thermoplastischen Kunststoff auf der zweiten, dem ersten Kunststoff-Formteil gegenüberliegenden, Fläche mittels indirekter Laserbestrahlung aufgebracht werden. Auf diese Weise erhält man eine Kunststoff-Metall-Kunststoff-Sandwichstruktur.

In einer weiteren bevorzugten Ausführungsform wird die Verbindungsfestigkeit zwischen den beiden Formteilen dadurch erhöht, dass die Oberfläche des metallischen Formteils strukturiert ist. Die Metall-Oberfläche kann beispielsweise aufgeraut sein. Die gemittelte Rautiefe Rz sollte in der Größenordnung von 20 bis 300 µm liegen. Sie kann auch Einkerbungen, Vertiefungen, Rillen o. dgl. aufweisen. Außerdem kann die Oberfläche mit Hinterschnitten versehen sein.

Des Weiteren wird in einer bevorzugten Ausführungsform die mit dem Laser zu bestrahlende Fläche des Metall-Formteils, d.h. der Fügebereich, mit wenigstens einer Absorptionsschicht versehen, um die Absorption der Laserstrahlung zu erhöhen. Eine solche Absorptionsschicht enthält Stoffe, Partikel o. dgl., z.B. Farbstoffe oder Pigmente, welche eine möglichst hohe Absorption der Laserwellenlänge aufweisen. Beispielsweise kann ein mit Rußpartikeln versetzter Lack als Absorptionsschicht auf das Metall-Formteil aufgetragen werden. Die Absorption der Absorptionsschicht beträgt vorzugsweise mindestens 50 %, besonders bevorzugt mindestens 80 % und ganz besonders bevorzugt mindestens 95 %.

Bei Metallen, die im Wellenlängenbereich des Lasers absorbierende Oxide bilden, kann die Absorption der Laserstrahlung durch das metallische Formteil auch dadurch erhöht werden, dass vor der Bestrahlung die Metall-Fläche oxidiert wird. Dies kann beispielsweise durch eine chemische Oxidation oder durch die Bestrahlung mit einem Laser von hoher Energie, insbesondere von mindestens 100 W/mm², erfolgen.

Die Absorptionsschicht kann auch eine absorbierende Folie sein, die zwischen dem thermoplastischen Formteil und dem Metall-Formteil angeordnet ist. Als absorbierende Folie kann z.B. eine extrudierte, extrusionsgeblasene, gegossene oder gepresste thermoplastische Formmasse mit einer bevorzugten Schichtdicke von maximal 0,5 mm dienen.

Besonders vorteilhaft ist eine Absorptionsschicht, die gleichzeitig die an Metalloberflächen häufig große Reflexion des auftreffenden Laserstrahls reduzieren.

Bei den Formteilen aus Metall und Kunststoff kann es sich um Formteile beliebiger Art und Geometrie handeln, wie z.B. Platten, offene oder geschlossene Profile, Hohlkörper oder Halbschalen. Es kann sich sowohl um fertige Bauteile als auch um Halbzeuge handeln.

Als Metalle, die mit dem Laserstrahl nach dem erfindungsgemäßen Verfahren erwärmt werden können, sind z.B. Stahl, Edelstahl, Aluminium, Kupfer und deren Legierungen, z.B. Messing, geeignet. Es kann vorteilhaft sein, die Metalloberfläche kurz vor der Laserbestrahlung zu reinigen und/oder aufzurauen oder mit Haftvermittlern beschichtete Metalle zu verwenden.

Die Wanddicke des Metall-Formteils liegt üblicherweise, z.B. im Automobilbereich, im Bereich von 0,1 bis 3 mm, besonders bevorzugt von 0,3 bis 1,5 mm. Es können jedoch auch Formteile aus Metall mit einer Dicke von maximal 8 mm bearbeitet werden.

Für das Kunststoff-Formteil kommen alle gefüllten oder ungefüllten und/oder verstärkten oder unverstärkten thermoplastischen Polymere oder Mischungen solcher Polymere in Betracht. Im Falle der Bestrahlung des Metalls durch den Kunststoff hindurch, sind die Transmissionseigenschaften des Kunststoffs zu berücksichtigen. Beispiele für mögliche thermoplastische Polymere oder Copolymere sind Polyalkylenterephthalate, aromatische Polyester, Polyamid, Polycarbonat, Polyacrylat, Polymethacrylat, ABS-Pfropfpolymerisate, Polyolefine wie Polyethylen oder Polypropylen, Polystyrol, Polyvinylchlorid, Polyoxymethylen, Polyimid, Polyether und Polyetherketone, die einzeln oder als Blend aus verschiedenen Polymeren eingesetzt werden können. Der thermoplastische Kunststoff kann unverstärkt oder verstärkt und/oder ungefüllt oder gefüllt sein. Er kann ferner beliebige Zusatzstoffe wie z.B. Brandschutzmittel, Stabilisatoren, Schlagzähmodifikatoren, Nukleierungsmittel und Verarbeitungshilfsmittel, z.B. Gleitmittel, enthalten. Bevorzugte Kunststoffe sind Polyamide, Polyester und ihre Blends mit weiteren Polymeren.

Die Wanddicke des Kunststoff-Formteils liegt üblicherweise im Bereich von 0,5 bis 4 mm. Es können jedoch auch Kunststoff-Folien mit einer Dicke von 10 bis 500 µm eingesetzt werden. Daneben können auch Kunststoff-Formteile mit einer Dicke von mehr als 4 mm verwendet werden. Wird jedoch bei der indirekten Bestrahlung der Laserstrahl durch das Kunststoff-Formteil hindurch auf das Metall-Formteil gerichtet, so hängt die Wanddicke des Kunststoffs von dessen Transmissionseigenschaften ab. Eine ausreichende Transmission des Kunststoffs für die Laserwellenlänge muss gewährleistet sein: Diese sollte mindestens 15 % betragen.

Der bevorzugte Wellenlängenbereich des Lasers ist der infrarote Bereich von 800 bis 1200 nm. Als Laserstrahlquelle für das erfindungsgemäße Verfahren können z.B. Diodenlaser mit Wellenlängen von 808 nm, 940 nm oder 980 nm oder Nd: Yag-Laser mit einer Wellenlänge von 1064 nm eingesetzt werden. Für die direkte Laserbestrahlung des Metall-Formteils eignen sich auch Laser mit einer größeren Wellenlänge. So kann z.B. ein CO₂-Laser mit einer Wellenlänge von 10,6 µm eingesetzt werden.

Die Energie bzw. Energiedichte des Lasers hängt von der jeweiligen Anwendung, u.a. von dem gewählten Metall und Kunststoff sowie von der Oberflächenbeschaffenheit des Metalls und der Wanddicke der Formteile, ab. Bei kleinen, dünnen Metall-Formteilen kann eine Laserleistung von 60 W ausreichend sein, bei Metall-Formteilen mit großer Wanddicke dagegen kann die erforderliche Laserleistung bei 1000 W liegen.

Ein Vorteil des erfindungsgemäßen Verfahrens ist die hohe Adhäsion zwischen dem metallischen und dem Kunststoff-Formteil ohne zusätzlichen Haftvermittler. Das Verfahren erlaubt eine haftfeste Verbindung zwischen einem thermoplastischen Kunststoff und einem Metall ohne Haftvermittler oder formschlüssiger Verbindung mittels Umspritzen, Durchspritzen, Bördeln o. dgl. Die Verbindung weist eine hohe Dichtigkeit auf. Sie ist insbesondere flüssigkeitsdicht, z.B. bezüglich Wasser.

Vorteilhaft ist außerdem, dass die Laserbestrahlung, nicht nur eine verhältnismäßig großflächige, sondern auch eine lokal stark begrenzte Verbindung zwischen den beiden Formteilen erlaubt. Darüber hinaus ist die Handhabung des Verfahrens einfach. Im Vergleich zu dem Vorwärmen von metallischen Formteilen vor dem Anspritzen des Kunststoffs in einem Spritzgießwerkzeug ist der Energieaufwand bei dem erfindungsgemäßen Verfahren deutlich geringer. Zudem zeigen flächige Kunststoff-Metall-Verbundbauteile, welche durch Verbinden eines Metall- und eines Kunststoff-Formteils mittels Laserbestrahlung hergestellt wird, ein reduziertes Beulverhalten, d.h. die Ansprechschwelle für lokales Versagen des Verbundbauteils, z.B. durch Beulen oder Knicken bei einer Krafteinleitung oder bei einer Belastung des Verbundbauteils auf Biegung oder Torsion, ist erhöht.

Ein weiterer Gegenstand der Erfindung ist ein Kunststoff-Metall-Verbundbauteil, wenigstens bestehend aus einem Formteil aus Metall und einem Formteil aus thermoplastischem Kunststoff, welches dadurch gekennzeichnet ist, dass die Formteile mittels Laserbestrahlung miteinander verbunden sind.

Anwendungen des erfindungsgemäßen Verfahrens bzw. des erfindungsgemäßen Kunststoff-Metall-Verbundbauteils sind z.B. im Bereich der Elektrik, insbesondere der Automobilelektrik, zu sehen, wo elektrische Leiter z.B. mit Kunststoff ummantelt oder mit einem Kunststoffgehäuse versehen werden und eine ausreichende Dichtigkeit erforderlich ist. Dazu gehören z.B. Steckerleisten, die eigenständig oder in Bauteile, wie z.B. Sensorgehäusen oder Elektronikgehäusen, integriert sind. Daneben sind Anwendungen in der Kunststoff-Metall-Verbundtechnik möglich: durch die Adhäsion zwischen dem Kunststoff und dem Metall kann die Struktursteifigkeit eines Kunststoff-Metall-Verbundbauteils erhöht werden. Das Verfahren ist für sämtliche Varianten der Kunststoff-Metall-Verbundtechnik, z.B. für Insert- und Outsert-Technik, Extrusion von Profilen oder Folien mit Kunststoff-Metall-Verbindung sowie Hybridtechnik, wie z.B. aus DE-A 03 838 895 bekannt, geeignet. Auch bei Mehrschichtverbundfolien mit mindestens einer Metallfolie, z.B. flexible Leiterbahnen, kann das Verfahren eingesetzt werden. Ein weiteres Anwendungsgebiet sind Kunststoffbehälter, Kunststoffrohre o. dgl., die eine außen oder innen liegende Metallfolie aufweisen, z.B. zur Permeationsreduzierung bei Kraftstoffbehältern oder zur Ableitung elektrostatischer Aufladung.

Das Verfahren ist nicht auf die Erzeugung einer Verbindung zwischen einem Metall-Formteil und einem Kunststoff-Formteil im ursprünglichen Herstellungsprozess eines Kunststoff-Metall-Verbundbauteiles beschränkt. Es kann auch zur nachträglichen Verbesserung der Kunststoff-Metall-Verbindung verwendet werden, z.B. zur Wiederherstellung der Dichtigkeit bei Reparaturen.

Die Erfindung wird nachfolgend anhand der beigefügten Zeichnungen näher erläutert. Es zeigen:
- Figur 1: eine schematische Darstellung einer ersten Ausführungsform, bei der mittels direkter Laserbestrahlung die Verbindung des Metall-Formteils mit dem Kunststoff-Formteil bewirkt wird
- Figur 2: eine schematische Darstellung einer zweiten Ausführungsform, bei der mittels indirekter Laserbestrahlung die Verbindung des Metall-Formteils mit dem Kunststoff-Formteil bewirkt wird
- Figur 3: eine schematische Darstellung einer weiteren Ausführungsform, bei der die Oberfläche des Metall-Formteils Hinterschnitte aufweist

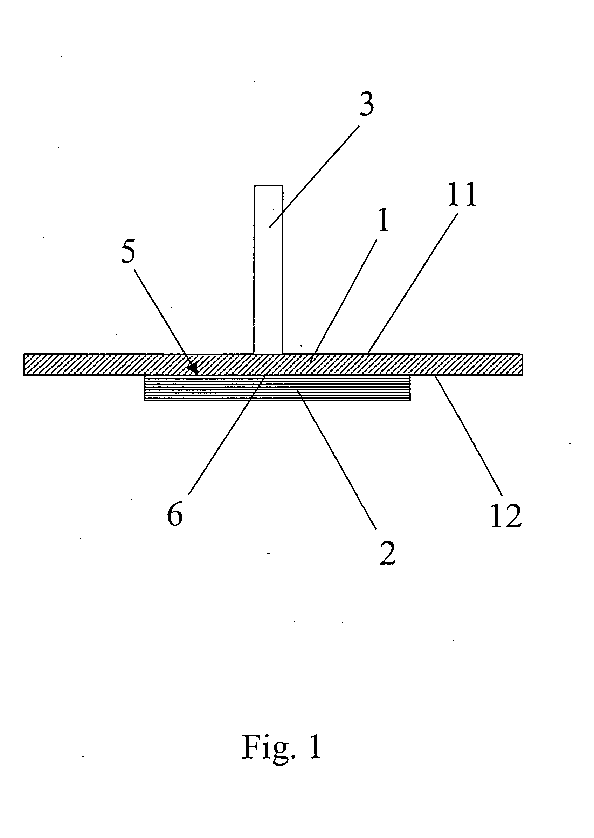

In Figur 1 ist eine erste Ausführungsform des erfindungsgemäßen Verfahrens, die direkte Laserbestrahlung des metallischen Formteils, schematisch dargestellt. Im Kontaktbereich 5 zwischen den beiden Formteilen 1, 2 berührt die Fläche 12 des metallischen Formteils 1 das Kunststoff-Formteil 2. Im Verbindungsbereich 6 wird ein Laserstrahl 3 auf die Fläche 11 des Metall-Formteils 1 gerichtet, die dem Kunststoff-Formteil 2 gegenüberliegt. Bei der direkten Laserbestrahlung wird also der Laserstrahl 3 auf die dem Kunststoff-Formteil 2 abgewandte Fläche 11 gerichtet. Durch die Laserbestrahlung wird im Verbindungsbereich 6 eine adhäsive Verbindung des Kunststoff-Formteils 2 mit dem Metall-Formteil 1 bewirkt. Die Erwärmung der Metalloberfläche 11 durch den Laser und die Wärmeleitung durch das Metall-Formteil 1 führt zum Schmelzen des Kunststoff-Formteils 2 an der Verbindungsbereich 6.

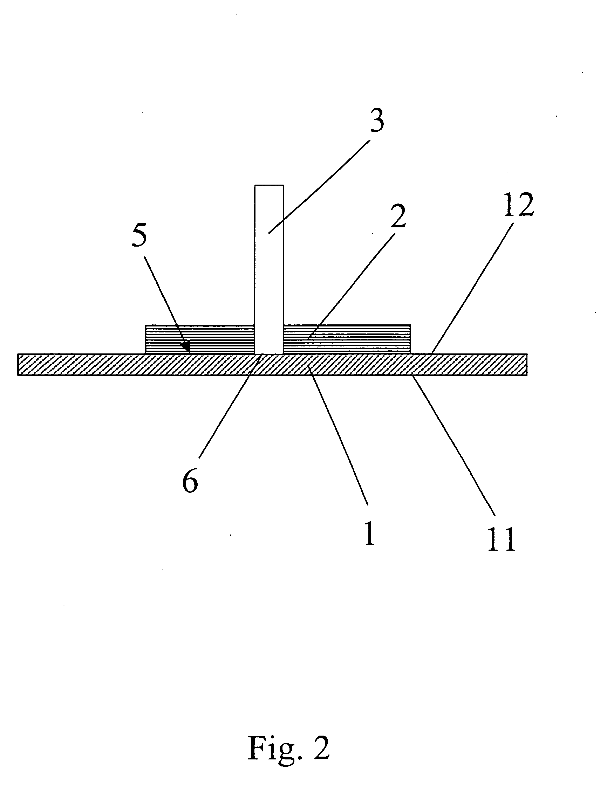

Eine alternative Ausführungsform, die indirekte Laserbestrahlung, ist in Figur 2 gezeigt. Im Verbindungsbereich 6 zwischen den beiden Formteilen 1, 2 wird der Laserstrahl 3 auf die Fläche 12 des metallischen Formteils 1 gerichtet, die das Kunststoff-Formteil 2 berührt. Das Formteil 2 besteht aus einem thermoplastischen Kunststoff, der für die Laserwellenlänge eine hohe Transparenz aufweist. Der Laserstrahl 3 geht durch das Kunststoff-Formteil 2 hindurch und bringt den Kunststoff 2 im Verbindungsbereich 6 aufgrund der Erwärmung der Oberfläche 12 des Metall-Formteils 1 zum Schmelzen, wodurch die Verbindung der beiden Formteile 1, 2 erfolgt. Im Gegensatz zur direkten Bestrahlung ist bei der indirekten Bestrahlung also der Laserstrahl 3 auf die mit dem Kunststoff-Formteil in Berührung stehende Fläche 12 gerichtet.

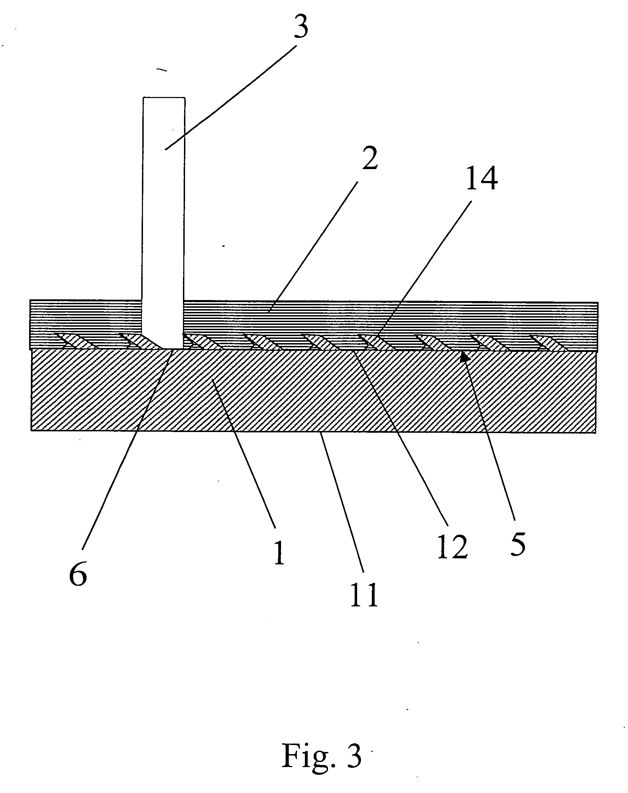

In einer weiteren Ausführungsform, dargestellt in Figur 3, weist die dem Kunststoff-Formteil 2 zugewandte Fläche 12 des Metall-Formteils 1 Hinterschnitte 14 auf. Im Verbindungsbereich 6 wird das metallische Formteil 1 indirekt, d.h. durch das Kunststoff-Formteil 2 hindurch, mit einem Laserstrahl 3 erwärmt. Der geschmolzene Kunststoff 2 wird durch den Fügedruck in die Hinterschnitte 14 gedrückt. Alternativ könnte in dieser Ausführungsform auch die Bestrahlung des metallischen Formteils 1 mit dem Laserstrahl 3 direkt auf die Fläche 11 erfolgen.

### Beispiel

Es wurde ein Formteil 1 aus Stahl ST37 mit einem Formteil 2 aus unverstärktem Polyamid 6 (Durethan® B 30S der Fa. Bayer AG) mittels direkter Laserbestrahlung, wie in Figur 1 schematisch dargestellt, verbunden. Die dem Kunststoff-Formteil 2 zugewandte Fläche 12 des Metall-Formteils 1 war phosphatiert. Die Dicke des metallischen Formteils 1 betrug 0,8 mm, die Dicke des Kunststoff-Formteils 2 betrug 1,2 mm.

Als Laser wurde ein Nd: Yag mit einer Wellenlänge von 1064 nm und einer Leistung von 60 W verwendet.

In Tests zur Prüfung der Festigkeit der Verbindung zwischen den beiden Formteilen 1, 2 lagen die Reißkräfte im Bereich von 126 bis 324 N.

## Patentansprüche

1. Verfahren zum Verbinden wenigstens eines Formteils aus Metall und eines Formteils aus thermoplastischem Kunststoff, **dadurch gekennzeichnet, dass** die Formteile in Kontakt gebracht werden und im Kontaktbereich das Formteil aus Metall mit einem Laser bestrahlt wird.

2. Verfahren nach Anspruch 1, **dadurch gekennzeichnet, dass** das Formteil aus Metall auf seiner dem Formteil aus Kunststoff gegenüberliegenden Fläche bestrahlt wird.

3. Verfahren nach einem der Ansprüche 1 oder 2, **dadurch gekennzeichnet, dass** das Formteil aus Metall auf seiner dem Formteil aus Kunststoff zugewandten Fläche bestrahlt wird.

4. Verfahren nach einem der Ansprüche 1 bis 3, **dadurch gekennzeichnet, dass** das Formteil aus Metall im Kontaktbereich eine strukturierte Oberfläche, vorzugsweise eine Oberfläche mit Hinterschnitten, aufweist.

5. Verfahren nach einem der Ansprüche 1 bis 4, **dadurch gekennzeichnet, dass** die Wellenlänge des Lasers von 800 bis 1200 nm beträgt.

6. Verfahren nach einem der Ansprüche 1 bis 5, **dadurch gekennzeichnet, dass** das Metall Stahl, Edelstahl, Aluminium, Kupfer oder eine Legierung dieser Metalle ist.

7. Verfahren nach einem der Ansprüche 1 bis 6, **dadurch gekennzeichnet, dass** das metallische Formteil mit einer Absorptionsschicht versehen ist, welche eine Absorption im Wellenlängenbereich von 800 bis 1200 nm aufweist.

8. Verfahren nach einem der Ansprüche 1 bis 7, **dadurch gekennzeichnet, dass** der thermoplastische Kunststoff ein unverstärkter oder verstärkter und/oder ungefüllter oder gefüllter Kunststoff aus der Gruppe Polyalkylenterephthalat, Polyester, Polyamid, Polycarbonat, Polyacrylat, Polymethacrylat, ABS-Pfropfpolymerisat, Polyolefin, insbesondere Polyethylen oder Polypropylen, Polystyrol, Polyvinylchlorid, Polyoxymethylen, Polyimid, Polyether und Polyetherketon oder eine Mischung dieser Polymere ist.

9. Kunststoff-Metall-Verbundbauteil, wenigstens bestehend aus einem Formteil aus Metall und einem Formteil aus thermoplastischem Kunststoff, **dadurch gekennzeichnet, dass** die Formteile mittels Laserbestrahlung miteinander verbunden sind.
